# EUROPÄISCHE PATENTSCHRIFT

(11) **EP 2 065 523 B1**
(45) Veröffentlichungstag und Bekanntmachung des Hinweises auf die Patenterteilung: **23.08.2017**
(21) Anmeldenummer: 08020517.2
(22) Anmeldetag: 26.11.2008
(51) Int. Cl.: E03F 1/00

(54) **Rigole zur Speicherung und/oder Versickerung von Oberflächenwasser**
Drainage chamber for storing and/or infiltrating surface water
Rigole destinée au stockage et/ou à l'infiltration d'eau de surface

(30) Priorität: 30.11.2007 DE 202007016846 U
(43) Veröffentlichungstag der Anmeldung: 03.06.2009
(73) Patentinhaber: Heitker, Michael, 49808 Lingen (Ems) (DE)
(72) Erfinder: Heitker, Michael, 49808 Lingen (Ems) (DE)
(74) Vertreter: Jabbusch, Matthias

(56) Entgegenhaltungen:
- EP-A- 0 439 890
- EP-A- 1 526 223
- DE-U1-202005 010 090
- US-A- 5 810 510
- US-A1- 2004 076 473
- US-A1- 2007 181 197

## Beschreibung

Die Erfindung betrifft eine Rigole zur Speicherung und Versickerung oder Rückhaltung oder Filterung von Oberflächenwasser mit einem Rigolenkörper, wobei die Rigole zur Speicherung und Versickerung oder Rückhaltung oder Filterung von Oberflächenwasser mit wenigstens einem Rigolenkörper, wobei der Rigolenkörper aus mehreren Stützelementen zusammengesetzt ist, welche durch weitere Elemente miteinander verbunden sind.

Im Bereich von Verkehrsflächen, wie Straßen, Plätzen, Höfen anfallendes Niederschlags- und Tauwasser wird von diesen Flächen abgeführt und in den Wasserkreislauf zurückgeführt. Ein großer Teil dieses Oberflächenwassers oder auch Dränwassers wird dabei versickert, wobei bei versiegelten Flächen aufgrund des großen Volumens des anfallenden Niederschlagswassers ein künstlicher Versickerungsraum geschaffen werden muss. Diesem Zwecke dienen gattungsgemäße Rigolen.

Eine bekannte Rigole weist wenigstens einen Rigolenkörper auf, dieser wird im Erdreich angeordnet. Eine Wasserzuleitung führt zum Rigolenkörper, so dass der Rigolenkörper zugeleitetes Oberflächenwasser aufnehmen kann. Der Rigolenkörper zeichnet sich dadurch aus, dass er das Wasser innerhalb seines Körpers speichern kann und an das den Rigolenkörper umgebende Erdreich abgeben kann, bzw. in die Kanalisation oder in den Vorfluter ableiten kann.

Aus dem Stand der Technik sind Rigolenkörper bekannt, die aus einer Vielzahl von Systemelementen aus gespritztem Kunststoff zusammengesetzt sind. Jedes Systemelement ist beispielsweise quaderförmig ausgebildet, es weist äußere Wandabschnitte und innere Verstrebungen auf. Ein derartiges Systemelement ist beispielsweise aus der EP 0 439 890 A bekannt. Dieses bekanntes Systemelement ist als eine gattungsgemäße Rigole anzusehen. Die Systemelemente werden in Einzelelementen auf- und nebeneinander angeordnet, sie bilden dadurch einen Rigolenkörper insgesamt aus. Aufgrund der Gitterstrukturen innerhalb jedes Systemelementes ist der Rigolenkörper nach seiner Fertigstellung nicht begehbar und inspizierbar, da ein Vordringen in das Innere des Rigolenkörpers nicht möglich ist. Weiterhin ist zu berücksichtigen, dass die Tragfähigkeit der aus gespritztem thermoplastischem Kunststoff gefertigten Systemelemente beschränkt ist, so dass sich für den bekannten Rigolenkörper ein sehr eingeschränkter Belastbarkeitsbereich ergibt. Schließlich besteht noch das Problem, dass die quaderförmigen Systemelemente als solche zur Baustelle zu transportieren sind und eine Raumreduzierung während des Transportes in der Regel nicht möglich ist, da das Volumen der Systemelemente nicht Platz sparend verändert werden kann.

Der Erfindung liegt die Aufgabe zugrunde, eine Rigole der eingangs genannten Gattung aufzuzeigen, welche universell einsetzbar ist, zu Inspektionszwecken begehbar und preiswerter über weitere Strecken zu transportieren ist.

Diese Aufgabe ist erfindungsgemäß durch die Merkmale des Anspruchs 1 gelöst. Jedes Stützelement ist ein Rahmenelement, das aus miteinander verbundenen Profilen zusammengesetzt ist, dass sie zumindest ein Abdeckelement umfasst, das an einen Abschnitt des Rigolenkörpers angelegt ist, wobei das Abdeckelement eine Gitter- oder Tragplatte ist, und dass die Profile und die Gitter- oder Trageplatte aus einem Metallwerkstoff oder aus Beton gefertigt sind.

Bei der erfindungsgemäßen Rigole werden keine vorgefertigten gespritzten Systemelemente zum Ausbilden eines Rigolenkörpers eingesetzt. Vielmehr finden Stützelemente Verwendung, mit denen der Rigolenkörper ausgebildet ist. Der Rigolenkörper wird aus mehreren Stützelementen zusammengesetzt. Bei diesem Zusammensetzen finden weitere Elemente Anwendung, so dass insgesamt ein Rigolenkörper ausbildbar ist. Es erfolgt ein Zusammensetzen des Rigolenkörpers aus verschiedenen Elementen, nicht aber durch ein Aufeinanderlegen bzw. Nebeneinanderlegen baugleicher Systemelemente.

Jedes Stützelement ist nach der Erfindung ein Rahmenelement, das aus miteinander verbundenen Profilen zusammengesetzt ist, wobei die Rahmenelemente vorzugsweise durch Profile miteinander verbunden sind. Die Profile bilden die weiteren Elemente aus, mit denen die als Rahmenelemente ausgebildeten Stützelemente verbunden sind.

Das Zusammensetzen jedes Rahmenelementes erfolgt aus miteinander verbundenen Profilen. Die Rahmenelemente sind somit aus Profilen innerhalb einer Ebene ausgebildet, sie können daher flach aufeinander liegend oder eng nebeneinander stehend auf der Ladefläche eines Lastkraftwagens transportiert werden. Es wird kein fertiger Rigolenkörper transportiert, auch nicht bereits fertige Systemelemente des Rigolenkörpers, sondern lediglich im Transportzustand verdichtete Bauteile des Rigolenkörpers.

Die Rahmenelemente sind durch weitere Profile miteinander verbunden. Dadurch ergibt sich insgesamt eine Fachwerk-Architektur, wobei der Abstand zwischen einander benachbarten Rahmenelementen variieren kann. Auch die Anzahl der Profile innerhalb eines Rahmenelementes ist frei wählbar, um die anfallenden Lasten aufnehmen zu können.

Die Profile der Rahmenelemente und die weiteren Profile weisen zueinander jeweils einen Abstand auf, der beispielsweise 1 Meter ist. Um diesen Abstand abzudecken und ein Eindringen von Erdreich in das Innere des Rigolenkörpers zu verhindern, weist die Rigole nach der Erfindung zumindest ein Abdeckelement auf, das an einen Abschnitt des Rigolenkörpers angelegt ist. Das Abdeckelement überbrückt den Abstand zwischen einander benachbarten Profilen. Es ist als Gitter- oder Tragplatte ausgebildet, so dass das Abdeckelement wasserdurchlässig ist. Die einzelnen Durchbrüche der Platte können mit einem Geotextilmaterial abgedeckt sein, welches auf die Platte aufgelegt ist.

Anstelle eines Geotextilmaterials kann auf das Abdeckelement auch ein wasserundurchlässiges Flächenelement aufgelegt sein, um z.B. aus dem Rigolenkörper abfließendes Wasser von bestimmten Bereichen fernzuhalten. Das wasserundurchlässige Flächenelement kann eine Dichtungsbahn sein. Anstelle von Gittern sind auch tragende Netze, Kunststoffprofilplatten oder eine Betondecke auflegbar.

Jedes Profil der Rahmenelemente ist vorzugsweise balkenförmig ausgebildet. Der Profilquerschnitt in Breite und Höhe kann variieren, um die anfallenden Kräfte sicher aufnehmen zu können.

Die weiteren Profile sind vorzugsweise mit einer winkeligen Kontur ausgerüstet, die sich mit ihren Winkeln an Abschnitte der Rahmenelemente anschmiegen kann. Die Profile sind beispielsweise als L-Profile ausgebildet, mit dem Winkel des L können sie sich an Ecken der Rahmenelemente anlegen.

Zur weiteren Ausbildung der Erfindung kann noch vorgesehen sein, dass im Inneren des Rigolenkörpers ein Leitungsabschnitt angeordnet ist. Dieser Leitungsabschnitt kann eingeleitete Flüssigkeit aufnehmen und über verschiedene Bereiche des Rigolenkörpers verteilen. Innerhalb eines Leitungsabschnittes ist zudem eine Sedimentstrecke oder Substratfilterstrecke ausbildbar, um das durch den Leitungsabschnitt fließende Wasser nach einer Reinigung der Rigole zuzuführen. Der Leitungsabschnitt kann dabei ein über etwa 270° geschlossenes Rohr sein, dessen Öffnung in Richtung der Rigolendecke ausgerichtet ist. Der Leitungsabschnitt kann der Reinigung und Verteilung des Wassers in den Rigolenkörpern dienen, ebenso einer Kamerainspizierung und Spülung, sowie einer begehbaren Inspektionsmöglichkeit.

Im Bereich des Rigolenbodens kann auch außerhalb des Leitungsabschnittes ein Filtersubstrat austauschbar eingebracht sein. Wenn die vertikal angeordneten Profile der Rahmenelemente z.B. eine Länge von zwei Metern haben, so ergibt sich eine entsprechende lichte Höhe innerhalb des Rigolenkörpers. Der Rigolenkörper ist dann begehbar und inspizierbar. Ein im Bereich des Rigolenbodens eingebrachtes Filtersubstrat kann ausgetauscht werden und Sedimentationsablagerungen können entnommen werden, um eine Funktion mit voller Sickerleistung wieder herzustellen.

Auf den Rigolenkörper ist ein Filterschacht aufsetzbar, an den Wasserzuleitungen anschließbar sind. Der Rigolenkörper weist eine mechanische Festigkeit auf, einen Filterschacht zu tragen. Der Filterschacht kann zugleich als Inspektionsschacht zum Zugang in das Innere des Rigolenkörpers dienen.

Die Profile und die weiteren Profile sind vorzugsweise aus einem Kunststoff gefertigt. Hierbei handelt es sich nicht um thermoplastischen Kunststoff, wie er z.B. für ein Spritzgussprodukt als Einzelelement eines Rigolenkörpers verwendet wird, sondern um einen duroplastischen faserverstärkten Kunststoff mit wesentlich höherer Festigkeit. Alternativ kann auch ein korrosionsbeständiger Metallwerkstoff eingesetzt sein

Ausführungsbeispiele der Erfindung, aus denen sich weitere erfinderische Merkmale ergeben, sind in der Zeichnung dargestellt. Es zeigen:
- Fig. 1:: ein Rahmenelement als erstes Ausführungsbeispiel eines Stützelementes für einen Rigolenkörper einer Rigole;
- Fig. 2:: einen aus mehren Rahmenelementen gemäß Fig. 1 zusammengesetzten Rigolenkörper;
- Fig. 3:: einen Rigolenkörper mit Abdeckelementen;
- Fig. 4:: einen Rigolenkörper mit weiteren Abdeckelementen und
- Fig. 5:: einen ins Erdreich eingebauten Rigolenkörper nach Fig. 2 mit einem Filterschacht,

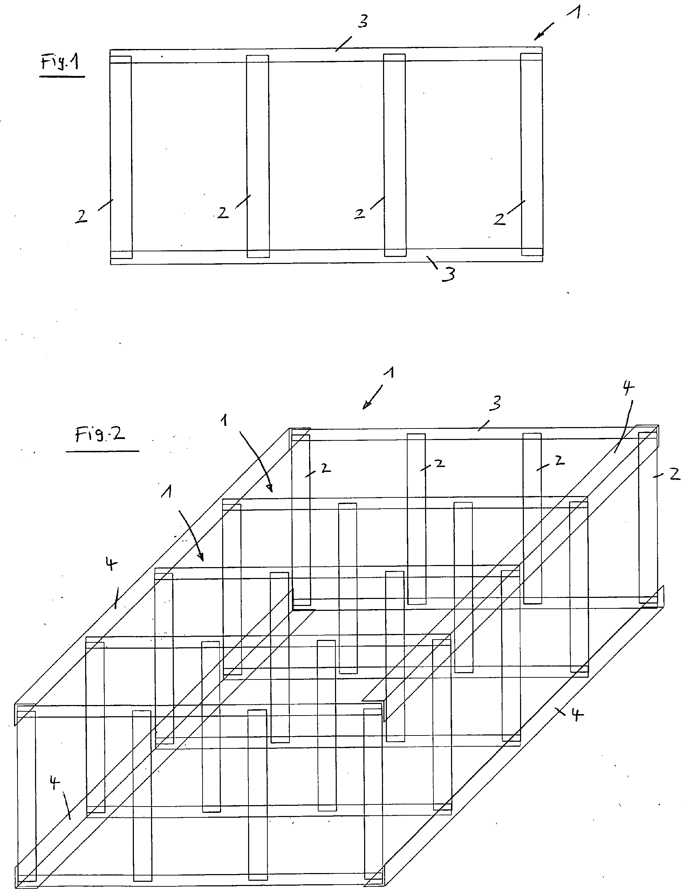

Das Rahmenelement 1 in Fig. 1 ist aus miteinander verbundenen Profilen 2, 3 ausgebildet. Die Profile 2, 3 sind in ein und derselben Ebene angeordnet, die Profile 3 verlaufen im Fig. 2 gezeigten Einbauzustand der Rahmenelemente 1 horizontal, während die Profile 2 im Einbauzustand vertikal angeordnet sind.

In Fig. 2 sind fünf Rahmenelemente 1 nebeneinander gestellt und mit weiteren Profilen 4 miteinander verbunden. Insgesamt wird somit ein quaderförmiger Rigolenkörper ausgebildet. Die weiteren Profile 4 sind als L-Profile ausgebildet, sie schmiegen sich an Eckausbildungen der Rahmenelemente 1 an. Weitere Zwischenabstandsprofile zwischen den Rahmenelementen sind möglich.

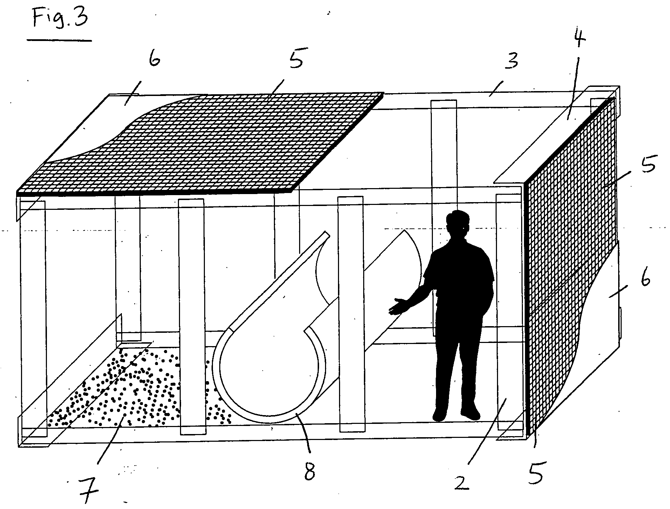

In Fig. 3 ist gezeigt, dass der Abstand zwischen einzelnen Profilen, beispielsweise zwischen horizontal ausgerichteten Profilen 3 durch als Gitter 5 ausgebildete Abdeckelemente überbrückbar ist. Gitter 5 sind auch an vertikalen Abschnitten des Rigolenkörpers angeordnet, um den Abstand zwischen vertikal stehenden Profilen 2 oder weiteren Profilen 4 zu überbrücken. Auf die Gitter 5 ist ein wasserdurchlässiges Geotextilmaterial 6 aufgelegt.

In das Innere des Rigolenkörpers ist ein Leitungsabschnitt eingebracht, der als Rohr 8 ausgebildet ist. Das Rohr ist über etwa 270° geschlossen und oben offen. In Bereiche des Rigolenbodens, die nicht vom Rohr 8 abgedeckt sind, ist ein Filtersubstrat 7 eingebracht. Die im Inneren des Rigolenkörpers angedeutete Person 9 zeigt die realisierte Bauhöhe des Rigolenkörpers und eine begehbare Inspektionsmöglichkeit.

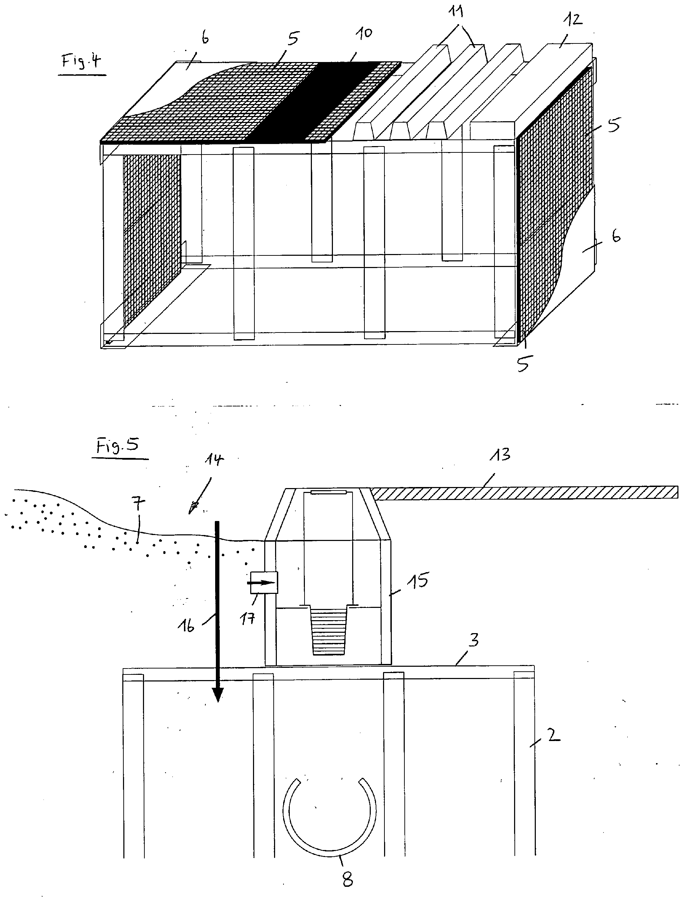

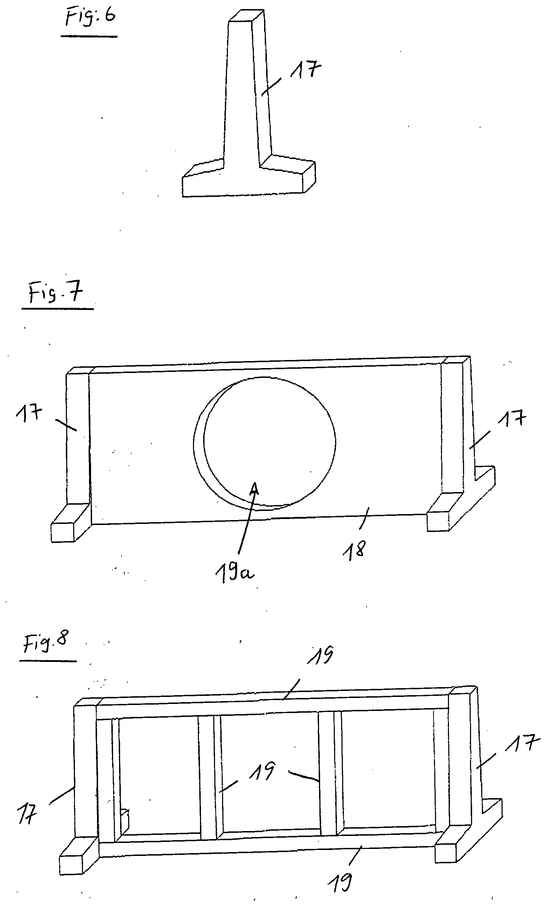

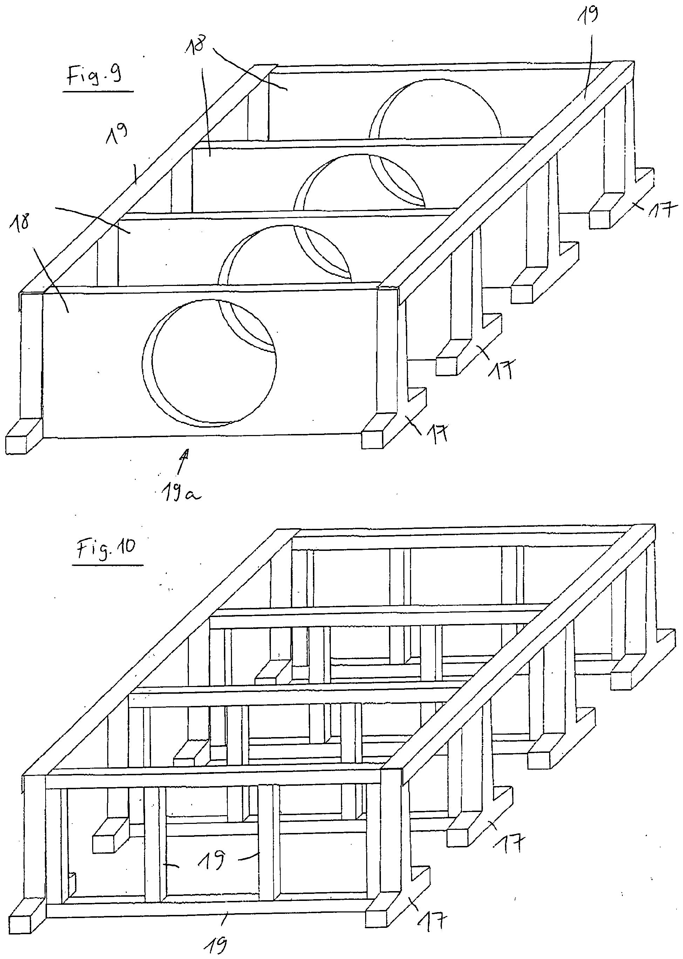

Fig. 4 zeigt, dass an der Außenseite des Rigolenkörpers neben der Anordnung des Gitters 5 mit einem Geotextil 6 auf das Gitter 5 auch eine wasserundurchlässige Folie 10 aufgelegt sein kann. Anstelle eines Gitters 5 können auch geschlossene oder offene Konstruktionen, wie Trapezplatten 11 oder Betonplatten 12 aufgelegt werden.

Fig. 5 zeigt die Zuordnung des Rigolenkörpers zu einer Straße einen Parkplatz 13, neben der eine Sickermulde 14 angeordnet ist. Von der Straße 13 ablaufendes Wasser kann über einen Filterschacht 15 oder über die Sickermulde 14 in den Rigolenkörper eintreten. Bei einem Fließen des Wassers entlang des Pfeils 16 durch den Boden der Sickermulde 14 hindurch kann zugleich eine Reinigung des Wassers erfolgen, da in den Boden der Sickermulde 14 ein Filtersubstrat 7 eingebracht ist. Auch im Bereich der seitlichen Wandaustrittsfläche kann ein Filtersubstrat 7 eingebracht sein. An einen Anschluss 17 des Filterschachtes 15 ist eine direkt Zuleitung anschließbar, die weitere Filterung kann über die Substratfilterschicht innerhalb des Rigolenkörpers erfolgen.

## Patentansprüche

1. Rigole zur Speicherung und Versickerung oder Rückhaltung oder Filterung von Oberflächenwasser mit wenigstens einem Rigolenkörper, wobei der Rigolenkörper aus mehreren Stützelementen zusammengesetzt ist, welche durch weitere Elemente miteinander verbunden sind, wobei jedes Stützelement ein Rahmenelement (1) ist, das aus miteinander verbundenen Profilen (2,3) zusammengesetzt ist, wobei sie zumindest ein Abdeckelement umfasst, das an einen Abschnitt des Rigolenkörpers angelegt ist, wobei das Abdeckelement eine Gitter- oder Tragplatte (5) ist, **dadurch gekennzeichnet, dass** die Profile (2,3) und die Gitter- oder Trageplatte (5) aus einem Metallwerkstoff, Kunststoff oder aus Beton gefertigt sind, wobei die Rahmenelemente (1) in einer vertikalen Ebene angeordnet sind, welche durch die weitere Elemente (4), die horizontal angeordnet sind, miteinander verbunden sind, wobei der Abstand zwischen einander benachbarten Rahmenelementen (1) variieren kann, und wobei die Anzahl der vertikalen Profile (2) innerhalb eines Rahmenelementes frei wählbar ist, um die anfallenden Lasten aufnehmen zu können.

2. Rigole nach Anspruch 1, **dadurch gekennzeichnet, dass** die weitere Elemente weitere Profile (4) sind.

3. Rigole nach Anspruch 1 oder 2, **dadurch gekennzeichnet, dass** die Profile (2,3) der Rahmenelemente (1) balkenförmig ausgebildet sind.

4. Rigole nach einem der vorhergehenden Ansprüche, **dadurch gekennzeichnet, dass** die weiteren Profile (4) eine winkelige Kontur aufweisen.

5. Rigole nach Anspruch 4, **dadurch gekennzeichnet, dass** die weiteren Profile (4) als L-Profile ausgebildet.

6. Rigole nach einem der vorhergehenden Ansprüche, **dadurch gekennzeichnet, dass** auf die Gitter- oder Tragplatte (5) ein Geotextilmaterial (6) aufgelegt ist.

7. Rigole nach Anspruch 6, **dadurch gekennzeichnet, dass** das Abdeckelement ein wasserundurchlässiges Flächenelement ist.

8. Rigole nach einem der vorhergehenden Ansprüche, **dadurch gekennzeichnet, dass** im Innern des Rigolenkörpers ein Leitungsabschnitt angeordnet ist.

9. Rigole nach Anspruch 8, **dadurch gekennzeichnet, dass** der Leitungsabschnitt ein über etwa 270° geschlossenes Rohr (8) ausgebildet ist, dessen Öffnung in Richtung der Rigolendecke ausgerichtet ist.

10. Rigole nach einem der vorhergehenden Ansprüche, **dadurch gekennzeichnet, dass** im Bereich des Rigolenbodens und/oder der Rigolenwände ein Filtersubstrat (7) austauschbar eingebracht ist.

11. Rigole nach einem der vorhergehenden Ansprüche, **dadurch gekennzeichnet, dass** auf den Rigolenkörper ein Filterschacht (15) aufgesetzt ist, an den Wasserzuleitungen anschließbar sind.

12. Rigole nach einem der vorhergehenden Ansprüche, **dadurch gekennzeichnet, dass** der Kunststoff ein Duroplast ist.

13. Rigole nach Anspruch 12, **dadurch gekennzeichnet, dass** der Kunststoff ein faserverstärkter Kunststoff ist.

## Claims

1. A drainage chamber for storage and infiltration or retention or filtration of surface water with at least one drainage chamber body, wherein the drainage chamber body is put together from a number of supporting elements which are connected to one another by further elements, wherein each supporting element is a frame element (1) which is made up of profiles (2, 3) connected to one another, wherein they comprise at least one cover element, which is supported against a section of the drainage chamber body, wherein the cover element is a grid or support plate (5), **characterised in that** the profiles (2, 3) and the grid or support plate (5) are made from a metallic material, plastic, or concrete, wherein the frame elements (1) are arranged in a vertical plane, and are connected to one another by the further elements (4), which are arranged horizontally, wherein the distance between adjacent frame elements (1) may vary, and wherein the number of vertical profiles (2) within one frame element is freely selectable, in order to be able to absorb the occurring loads.

2. The drainage chamber according to claim 1, **characterised in that** the further elements are further profiles (4).

3. The drainage chamber according to claim 1 or 2, **characterised in that** the profiles (2, 3) of the frame elements (1) are beam-shaped.

4. The drainage chamber according to one of the preceding claims, **characterised in that** the further profiles (4) have an angular contour.

5. The drainage chamber according to claim 4, **characterised in that** the further profiles (4) are formed as 'L' profiles.

6. The drainage chamber according to one of the preceding claims, **characterised in that** a geotextile material (6) is applied to the grid or support plate (5).

7. The drainage chamber according to claim 6, **characterised in that** the cover element is a water impermeable surface element.

8. The drainage chamber according to one of the preceding claims, **characterised in that** a pipeline section is arranged in the interior of the drainage chamber body.

9. The drainage chamber according to claim 8, **characterised in that** the pipeline section is formed as a pipe (8) which is closed up to approximately 270°, the opening of which is oriented towards the drainage chamber ceiling.

10. The drainage chamber according to one of the preceding claims, **characterised in that** a filter substrate (7) may be interchangeably placed in the drainage chamber floor and/or drainage chamber wall area.

11. The drainage chamber according to one of the preceding claims, **characterised in that** a filter shaft (15) is placed on the drainage chamber body, to which water supply lines are connectable.

12. The drainage chamber according to one of the preceding claims, **characterised in that** the plastic is a thermosetting plastic.

13. The drainage chamber according to claim 12, **characterised in that** the plastic is a fibre-reinforced plastic.

## Revendications

1. Rigole destinée à accumuler et à infiltrer ou à retenir ou à filtrer de l'eau superficielle, avec au moins un corps de rigole, le corps de rigole étant assemblé à partir de plusieurs éléments de support, lesquels sont reliés les uns aux autres par des éléments supplémentaires, chaque élément de support étant un élément en forme de cadre (1) qui est assemblé à partir de profilés (2, 3) reliés les uns aux autres, sachant qu'elle comprend au moins un élément de recouvrement qui est adjacent à un segment du corps de rigole, l'élément de recouvrement étant une plaque grillagée ou une plaque de support (5), **caractérisée en ce que** les profilés (2, 3) et la plaque grillagée ou plaque de support (5) sont fabriqués en une matière métallique, en matière plastique ou en béton, les éléments en forme de cadres (1) étant placés dans un plan vertical et étant reliés les uns aux autres par les éléments supplémentaires, (4) qui sont placés à l'horizontale, l'écart entre des éléments en forme de cadres (1) voisins pouvant être variable, et le nombre des profilés verticaux (2) à l'intérieur d'un élément en forme de cadre étant librement sélectionnable, pour être en mesure de supporter les charges produites.

2. Rigole selon la revendication 1, **caractérisée en ce que** les éléments supplémentaires sont des profilés (4) supplémentaires.

3. Rigole selon la revendication 1 ou 2, **caractérisée en ce que** les profilés (2, 3) des éléments en forme de cadres (1) sont conçus sous la forme de barres.

4. Rigole selon l'une quelconque des revendications précédentes, **caractérisée en ce que** les profilés (4) supplémentaires présentent un contour angulaire.

5. Rigole selon la revendication 4, **caractérisée en ce que** les profilés supplémentaires (4) sont conçus en tant que profilés en L.

6. Rigole selon l'une quelconque des revendications précédentes, **caractérisée en ce que** sur la plaque grillagée ou plaque de support (5) est posée une matière géotextile (6).

7. Rigole selon la revendication 6, **caractérisée en ce que** l'élément de recouvrement est un élément plan imperméable à l'eau.

8. Rigole selon l'une quelconque des revendications précédentes, **caractérisée en ce qu'**à l'intérieur du corps de rigole est placé un tronçon de conduit.

9. Rigole selon la revendication 8, **caractérisée en ce que** le tronçon de conduit est conçu par un tube (8) fermé sur environ 270°, dont l'orifice est orienté en direction du fond supérieur de la rigole.

10. Rigole selon l'une quelconque des revendications précédentes, **caractérisée en ce que** dans la zone du fond inférieur de la rigole et/ou des parois de la rigole, un substrat filtrant (7) est inséré de manière interchangeable.

11. Rigole selon l'une quelconque des revendications précédentes, **caractérisée en ce que** sur le corps de rigole est emboîté un bac de filtrage (15) sur lequel des conduits d'alimentation d'eau peuvent être raccordés.

12. Rigole selon l'une quelconque des revendications précédentes, **caractérisée en ce que** la matière plastique est une matière duroplastique.

13. Rigole selon la revendication 12, **caractérisée en ce que** la matière plastique est une matière plastique renforcée par fibres.
